# EUROPÄISCHE PATENTSCHRIFT

(11) **EP 3 426 516 B1**
(45) Veröffentlichungstag und Bekanntmachung des Hinweises auf die Patenterteilung: **09.03.2022**
(21) Anmeldenummer: 17700668.1
(22) Anmeldetag: 18.01.2017
(51) Int. Cl.: B60K 37/06

(54) **BEDIENVORRICHTUNG UND VERFAHREN ZUM ERFASSEN EINER BENUTZERAUSWAHL ZUMINDEST EINER BEDIENFUNKTION DER BEDIENVORRICHTUNG**
OPERATING DEVICE AND METHOD FOR DETECTING A USER SELECTION OF AT LEAST ONE OPERATING FUNCTION OF THE OPERATING DEVICE
DISPOSITIF DE COMMANDE ET PROCÉDÉ POUR DÉTECTER LA SÉLECTION, PAR L'UTILISATEUR, D'AU MOINS UNE FONCTION DE COMMANDE DU DISPOSITIF DE COMMANDE

(30) Priorität: 12.03.2016 DE 102016003072
(43) Veröffentlichungstag der Anmeldung: 16.01.2019
(73) Patentinhaber: Audi AG, 85045 Ingolstadt (DE)
(72) Erfinder: WUNDERLICH, Matthias, 85053 Ingolstadt (DE)
(86) Internationale Anmeldenummer: PCT/EP2017/050915
(87) Internationale Veröffentlichungsnummer: WO 2017/157542

(56) Entgegenhaltungen:
- EP-A1- 1 865 404
- EP-A1- 2 124 139
- WO-A1-2013/080425

## Beschreibung

Die Erfindung betrifft ein Verfahren zum Erfassen einer Benutzerauswahl einer oder einiger oder aller Bedienfunktionen aus einer vorbestimmten Menge mehrerer Bedienfunktionen einer Bedienvorrichtung. Die Benutzerauswahl kann der Benutzer mittels seiner Finger ausführen. Zu der Erfindung gehört auch eine Bedienvorrichtung, durch welche mehrere Bedienfunktionen bereitgestellt sind, aus denen ein Benutzer eine Benutzerauswahl gemäß dem erfindungsgemäßen Verfahren treffen kann. Schließlich gehört zu der Erfindung noch ein Kraftfahrzeug mit der erfindungsgemäßen Bedienvorrichtung.

In einem Kraftfahrzeug kann eine zentrale Bedienvorrichtung bereitgestellt sein, die es einem Benutzer des Kraftfahrzeugs ermöglicht, mehrere unterschiedliche Fahrzeugkomponenten mittels einer jeweiligen Bedienfunktion zu bedienen. Beispielsweise können eine Bedienfunktion für eine Klimatisierungseinrichtung und eine Bedienfunktion für eine Medienwiedergabeeinrichtung, beispielsweise ein Radio, und eine Bedienfunktion für die Navigationseinrichtung des Kraftfahrzeugs bereitgestellt sein. Jede Bedienfunktion kann beispielsweise eine Benutzerschnittstelle, insbesondere eine graphische Benutzerschnittstelle (GUI - graphical user interface), für die jeweilige Fahrzeugkomponente umfassen. Möchte ein Benutzer des Kraftfahrzeugs nun mehrere der Fahrzeugkomponenten bedienen, so muss die jeweilige Bedienfunktion für die Fahrzeugkomponente in der Bedienvorrichtung aktivieren. Dies ist in der Regel nur nacheinander möglich, was das Bedienen zeitaufwändig und dahingehend umständlich macht, das zwischen den Bedienfunktionen gewechselt werden muss. Möchte ein Fahrer beispielsweise abwechselnd das Radio bedienen, die Klimatisierungseinrichtung justieren und in der Navigationseinrichtung Einstellungen vornehmen, so ist er jedes Mal dazu genötigt, die entsprechende Bedienfunktion in der Bedienvorrichtung zu aktivieren.

Eine Bedienvorrichtung für ein Kraftfahrzeug kann zum Erfassen von Benutzereingaben beispielsweise einen Touchscreen (Berührungsbildschirm) aufweisen. Im Zusammenhang mit der Erfassung von Benutzereingaben an einem Touchscreen ist aus der DE 10 2010 048 745 A1 bekannt, dass auf der Anzeigefläche eines Touchscreens mehrere graphische Objekte dargestellt werden können, die durch Antippen ausgewählt oder aktiviert werden können. Wird dagegen auf dem Touchscreen eine 2-Finger-Bedienung detektiert, so wird ein Verschiebemodus für die Objekte aktiviert, um die Objekte auf der Anzeigefläche neu arrangieren zu können.

Auch aus der DE 10 2008 022 752 A1 ist bekannt, an einem Touchscreen mehrere Berührungspositionen zu detektieren und hierdurch Vorgänge bei der Bedienung zu steuern, beispielsweise das Zoomen von Kartendarstellungen, das Drehen von Kartendarstellungen oder das Auswählen eines Objekts.

Aus der DE 10 2008 048 825 A1 ist ein Bildschirm bekannt, der eine Gestenerkennungseinheit aufweist, durch welche eine Aktivierungsgeste erkannt wird, die das Annähern einer ausgespreizten Hand an den Bildschirm erkennt und daraufhin einen Modifiziermodus für die Bedienvorrichtung aktiviert.

Die EP 1 865 404 A1 beschreibt ein Benutzerschnittstellensystem mit verbesserter Verwendbarkeit.

Bedienvorrichtungen, durch welche mehrere Bedienfunktionen bereitgestellt sind, sind aber nicht nur im Zusammenhang mit Kraftfahrzeugen bekannt. Auch beispielsweise ein portables, mobiles Endgerät, wie beispielsweise ein Smartphone oder ein Tablet-PC, stellt mehrere Bedienfunktionen bereit, jeweils eine zum Bedienen eines Programms oder einer Applikation des Endgeräts.

Der Erfindung liegt die Aufgabe zugrunde, bei einer Bedienvorrichtung, die eine vorbestimmte Menge auswählbarer Bedienfunktionen bereitstellt, die Nutzung mehrerer dieser Bedienfunktionen effizienter zu gestalten.

Die Aufgabe wird durch die Gegenstände der unabhängigen Patentansprüche gelöst. Vorteilhafte Weiterbildungen der Erfindung sind durch die Merkmale der abhängigen Patentansprüche, die folgende Beschreibung sowie die Figuren offenbart.

Durch die Erfindung ist ein Verfahren zum Erfassen einer Benutzerauswahl einer oder einiger oder aller Bedienfunktionen aus einer vorbestimmten Menge mehrerer Bedienfunktionen einer Bedienvorrichtung bereitgestellt. Die Bedienvorrichtung kann beispielsweise zum Bedienen mehrerer Fahrzeugkomponenten eines Kraftfahrzeugs oder mehrerer Applikationen eines mobilen Endgeräts, wie beispielsweise eines Smartphones oder Tablet-PCs, vorgesehen sein. In der Bedienvorrichtung wird durch eine Steuereinrichtung jeder der Bedienfunktionen der besagten Menge jeweils ein Finger einer Hand eines Benutzers zugeordnet. Durch eine Erfassungseinrichtung wird an einer vorbestimmten Berührfläche der Bedienvorrichtung eine Fingerberührung zumindest eines der Finger der Hand, insbesondere mehrerer Finger, erfasst. Falls mehrere Fingerberührungen erfasst werden, so ist vorgesehen, dass es sich um gleichzeitige Fingerberührungen handelt. Durch die Erfassungseinrichtung wird des Weiteren ermittelt, welcher der Finger der Hand die Berührfläche berührt, ob also beispielsweise ein Daumen und ein Zeigefinger oder ein Daumen und ein Mittelfinger die jeweils eine Fingerberührung durchführen. Bei der besagten Berührfläche kann es sich beispielsweise um eine Oberfläche handeln, beispielsweise die Oberfläche eines Touchscreens oder die Oberfläche einer berührungssensitiven Bedienfläche, das heißt eines sogenannten Touchpads, oder aber auch um eine virtuelle Berührfläche, die frei im Raum definiert sein kann. Durch die Steuereinrichtung wird als die Benutzerauswahl insgesamt jede der Bedienfunktionen, deren zugeordneter Finger die Berührfläche berührt, festgelegt. Die Benutzerauswahl wird durch Auswahldaten, welche jede ausgewählte Bedienfunktion identifizieren, an einen nachfolgenden Prozessschritt der Bedienvorrichtung signalisiert. In dem Prozessschritt stehen also mit den Auswahldaten Informationen bereit, welche der Bedienfunktionen der Benutzer mittels seiner Finger ausgewählt hat.

Durch die Erfindung ergibt sich der Vorteil, dass ein Benutzer gleichzeitig mehrere Bedienfunktionen auswählen kann und hierbei die Auswahl eine beliebige Kombination der vorhandenen auswählbaren Bedienfunktionen der Menge sein kann, da der Benutzer mit jedem Finger einzeln festlegen kann, welche der Bedienfunktionen er auswählen möchte. Hierbei ist insbesondere natürlich vorgesehen, dass pro Finger jeweils eine andere der Bedienfunktionen zugeordnet ist.

Um die Auswahl der Bedienfunktionen übersichtlicher zu gestalten, ist vorgesehen, dass die Bedienfunktionen der Menge, das heißt die auswählbaren Bedienfunktionen, jeweils durch ein eigenes graphisches Objekt auf einer Anzeigefläche repräsentiert, also beispielsweise auf einem Bildschirm angezeigt werden. Ein solches graphisches Objekt kann beispielsweise ein Icon oder ein Schriftzug sein. In dem Prozessschritt wird das jeweilige graphische Objekt jeder aus der Benutzerauswahl ausgeschlossenen Bedienfunktion, das heißt jede nicht ausgewählte Bedienfunktion der Menge, von der Anzeigefläche gelöscht. Jedes durch die Benutzerauswahl ausgewählte Objekt bleibt weiterhin angezeigt. Hierdurch kann der Benutzer mit einer einzigen Auswahl all diejenigen graphischen Objekte entfernen, die er nicht angezeigt haben möchte. Die Kombination der zu löschenden Objekte beziehungsweise der verbleibenden Objekte ist dabei beliebig einstellbar, da für jedes graphische Objekt ein Finger genutzt werden kann. Durch diese Weiterbildung kann ein Benutzer beispielsweise eine Menüstruktur an seine Bedürfnisse anpassen, das heißt die Menüstruktur individualisieren. Hierzu behält er diejenigen Menüeinträge als graphische Objekte durch Fingerberührung bei, die er nutzen möchte.

Dabei ist vorgesehen, dass die graphischen Objekte in einem anderen räumlichen Bereich angezeigt werden, als die jeweilige Fingerberührung des zumindest einen Fingers erfasst wird. Der Benutzer muss also mit seinen Fingern nicht das jeweilige graphische Objekt berühren, sondern kann auf eine Berührfläche neben den graphischen Objekten die Fingerberührung ausführen. Hierdurch bleiben beim Anlegen der Finger an die Berührfläche, das heißt während der Fingerberührungen, die graphischen Objekte für den Benutzer sichtbar. Hierbei kann vorgesehen sein, dass diejenigen graphischen Objekte, zu denen eine Fingerberührung des zugeordneten Fingers erkannt wurde, graphisch markiert werden.

Im Zusammenhang mit dem Repräsentieren der auswählbaren Bedienfunktion durch ein jeweiliges graphisches Objekt ist vorgesehen, dass in dem besagten Prozessschritt jede ausgewählte Bedienfunktion aktiviert wird, also beispielsweise eine jeweilige graphische Benutzerschnittstelle gestartet oder angezeigt wird, und hierbei die Anzeigefläche derart eingeteilt betrieben wird, dass gleichzeitig jeder aktivierten Bedienfunktion ein jeweiliger eigener Teilbereich der Anzeigefläche zum Ausgeben von jeweiligen Funktionsdaten bereitsteht. Insbesondere werden mehrere Bedienfunktionen aktiviert. Beispielsweise wird also die Anzeigefläche derart eingeteilt, dass jede Bedienfunktion ihre graphische Benutzerschnittstelle anzeigen kann. So kann also ein Benutzer eine persönliche Auswahl von Bedienfunktionen treffen und hat gleichzeitig auf der Anzeigefläche alle Bedienfunktionen verfügbar, das heißt sie sind von ihm bedienbar.

Zu der Erfindung gehören auch vorteilhafte Weiterbildungen, durch deren Merkmale sich zusätzliche Vorteile ergeben.

Gemäß einer Weiterbildung wird die Benutzerauswahl erst festgelegt, falls durch die Erfassungseinrichtung eine Bestätigungsgeste der Hand detektiert wird. Der Benutzer kann also mit zumindest einem Finger eine Fingerberührung an der Berührfläche ausführen und eine Bedienfunktion vorläufig markieren, ohne dass hierdurch zunächst die Benutzerauswahl festgelegt wird. Erst nachdem er auch die Bestätigungsgeste ausgeführt hat, ist die Benutzerauswahl festgelegt. Hierdurch ergibt sich der Vorteil, dass der Benutzer an der Berührfläche noch umgreifen kann, das heißt die Fingerberührung ändern kann, und erst die abschließende Kombination an Fingerberührungen mittels der Bestätigungsgeste bestätigt und hierdurch die Benutzerauswahl festgelegt wird.

Um beim Ausführen der Bestätigungsgeste nicht versehentlich die Fingerberührungskombination zu verändern, sieht eine Weiterbildung vor, dass als die Bestätigungsgeste eine Gesamtbewegung der Hand mitsamt den die Berührfläche berührenden Fingern in eine vorbestimmte Richtung entlang der Berührfläche detektiert wird. Der Benutzer kann also die Stellung der Finger an seiner Hand beibehalten und muss lediglich die gesamte Hand in die vorbestimmte Richtung bewegen. Hierdurch ist verhindert, dass es beim Ausführen der Bestätigungsgeste zu einer Veränderung der Kombination der Fingerberührungen kommt.

Im Folgenden sind Weiterbildungen beschrieben, die das Erfassen der Fingerberührung und das Identifizieren der Finger betreffen.

Gemäß einer Weiterbildung wird die Fingerberührung des zumindest einen Fingers an der Berührfläche durch eine Sensormatrix mit näherungssensitiven und/oder berührungssensitiven Sensoren, also beispielsweise kapazitiven Sensoren, detektiert. Hierdurch kann eine Fingerberührung beispielsweise an einem Touchscreen oder einem Touchpad, erkannt werden. Zusätzlich oder alternativ dazu kann vorgesehen sein, dass die Fingerberührung des zumindest einen Fingers an der Berührfläche mittels einer Kamera detektiert wird. Hierzu kann eine Objekterkennungseinrichtung Kamerabilder oder Bilddaten der Kamera auswerten. Bei der Kamera kann es sich insbesondere um eine Time-of-Flight-Kamera (TOF-Kamera) handeln, durch welche auch Abstandsdaten ermittelt werden können, die beim Detektieren eines Abstands eines Fingers von der Berührfläche genutzt werden können.

Eine Weiterbildung sieht vor, dass zum Identifizieren des zumindest einen die Berührfläche berührenden Fingers eine Anordnung von Berührstellen der berührenden Finger an der Berührfläche zugrundegelegt wird. Es kann also beispielsweise vorgesehen sein, dass die graphischen Objekte auf der Anzeigefläche in einem vorbestimmten Anordnungsmuster angezeigt werden und die Berührstellen der Finger dahingehend überprüft werden, welches Berührmuster sie bilden. Durch Vergleichen des Anordnungsmusters mit dem Berührmuster kann festgestellt werden, welcher Finger die Berührfläche berührt. Zusätzlich oder alternativ zum Analysieren der Anordnung von Berührstellen sieht eine Weiterbildung der Erfindung vor, dass die Finger der Hand mittels der besagten Time-of-Flight-Kamera erfasst werden und in 3D-Bilddaten der Time-of-Flight-Kamera jeder Finger der Hand erkannt und ein jeweiliger Abstand jedes Fingers zur Berührfläche ermittelt wird. Hierdurch ist dann bekannt, welcher Finger die Berührfläche berührt. Mittels dieser Lösung kann auch die besagte virtuelle Berührfläche realisiert werden.

Zum Durchführen des erfindungsgemäßen Verfahrens ist durch die Erfindung eine Bedienvorrichtung zum Erfassen einer Benutzerauswahl einer oder einiger oder aller Bedienfunktionen aus einer vorbestimmten Menge mehrerer Bedienfunktionen der Bedienvorrichtung bereitgestellt. Die erfindungsgemäße Bedienvorrichtung umfasst eine Erfassungseinrichtung zum Erfassen einer Fingerberührung zumindest eines Fingers einer Hand eines Benutzers (insbesondere mehrerer Finger) an einer vorbestimmten Berührfläche der Bedienvorrichtung und zum Ermitteln, welcher der Finger der Hand die Berührfläche berührt. Des Weiteren umfasst die Bedienvorrichtung eine Steuereinrichtung, die dazu eingerichtet ist, jeder der Bedienfunktionen der Menge jeweils einen Finger der Hand des Benutzers zuzuordnen und als die Benutzerauswahl insgesamt jede der Bedienfunktionen, deren zugeordneter Finger die Berührfläche berührt, festzulegen und die Benutzerauswahl durch Auswahldaten, welche jede ausgewählte Bedienfunktion identifizieren, an einen nachfolgenden Prozessschritt der Bedienvorrichtung zu signalisieren. Die Bedieneinrichtung ist dazu eingerichtet, die Bedienfunktionen der Menge jeweils durch ein eigenes graphisches Objekt auf einer Anzeigefläche zu repräsentieren und in dem Prozessschritt das jeweilige graphische Objekt jeder aus der Benutzerauswahl ausgeschlossenen Bedienfunktion der Menge von der Anzeigefläche zu löschen, und die graphischen Objekte in einem anderen räumlichen Bereich anzuzeigen als die jeweilige Fingerberührung des zumindest einen Fingers erfasst wird, dabei in dem Prozessschritt jede ausgewählte Bedienfunktion zu aktivieren und die Anzeigefläche derart eingeteilt zu betreiben, dass gleichzeitig jeder aktivierten Bedienfunktion ein jeweiliger eigener Teilbereich der Anzeigefläche zum Ausgeben von jeweiligen Funktionsdaten bereitsteht.

Die Steuereinrichtung kann beispielsweise auf der Grundlage einer Prozessoreinrichtung, beispielsweise eines Mikrocontrollers oder Mikroprozessors, realisiert sein. Insgesamt ist die Bedieneinrichtung dazu eingerichtet, eine Ausführungsform des erfindungsgemäßen Verfahrens durchzuführen. Hierzu kann beispielsweise auch ein entsprechendes Programmmodul vorgesehen sein, welches beispielsweise durch die Prozessoreinrichtung der Steuereinrichtung ausgeführt werden kann und welches beim Ausführen die durch die Steuereinrichtung auszuführenden Schritte des Verfahrens realisiert oder durchführt.

Wie bereits ausgeführt, ist die Bedienvorrichtung insbesondere auch in einem Kraftfahrzeug vorteilsbringend einsetzbar. Entsprechend sieht die Erfindung auch ein Kraftfahrzeug mit einer Ausführungsform der erfindungsgemäßen Bedienvorrichtung vor. Das erfindungsgemäße Kraftfahrzeug ist bevorzugt als Kraftwagen, insbesondere als Personenkraftwagen oder Lastkraftwagen, ausgestaltet.

Im Folgenden ist ein Ausführungsbeispiel der Erfindung beschrieben. Hierzu zeigt:
- Fig. 1: eine schematische Darstellung einer Ausführungsform der erfindungsgemäßen Bedienvorrichtung beim Anzeigen von graphischen Objekten, die jeweils eine auswählbare Bedienfunktion der Bedienvorrichtung repräsentieren;
- Fig. 2: eine schematische Darstellung der Bedienvorrichtung von Fig. 1 beim Erfassen mehrerer Fingerberührungen an einer Berührfläche;
- Fig. 3: eine schematische Darstellung der Bedienvorrichtung beim Erfassen einer Bestätigungsgeste;
- Fig. 4: eine schematische Darstellung einer Hand eines Benutzers während einer Auswahl zweier anderer Bedienfunktionen der Bedienvorrichtung; und
- Fig. 5: eine schematische Darstellung einer Anzeigefläche der Bedienvorrichtung, die derart eingeteilt betrieben wird, dass mehrere Bedienfunktionen gleichzeitig jeweilige Funktionsdaten ausgeben können.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

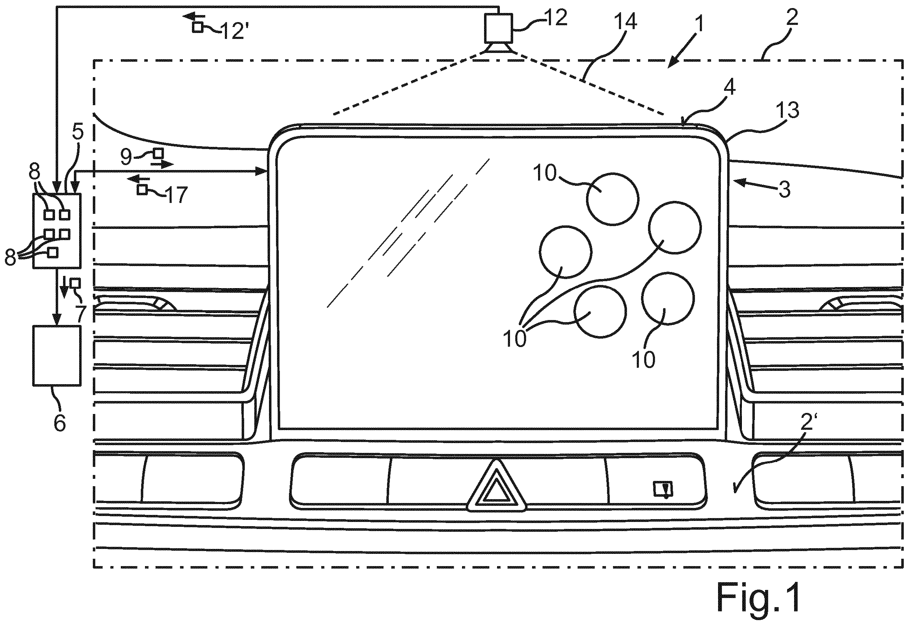

Fig. 1 zeigt eine Bedienvorrichtung 1, die beispielsweise in einem Kraftfahrzeug 2 oder (nicht dargestellt) in einem portablen, mobilen Endgerät, beispielsweise einem Smartphone oder einem Tablet-PC, bereitgestellt sein kann. Die Bedienvorrichtung 1 kann eine Anzeigeeinrichtung 3 mit einer Anzeigefläche 4 aufweisen. Die Anzeigeeinrichtung 3 kann beispielsweise ein Bildschirm oder eine Kopf-oben-Anzeige (Head-up-Display) sein. Ein Anzeigeinhalt auf der Anzeigefläche 4 kann durch eine Steuereinrichtung 5 gesteuert sein, die beispielsweise auf der Grundlage eines Mikrocontrollers oder Mikroprozessors realisiert sein kann. Durch die Steuereinrichtung 5 können beispielsweise Gerätekomponenten 6, beispielsweise Fahrzeugkomponenten des Kraftfahrzeugs 2, durch ein entsprechendes Steuersignal 7 gesteuert werden. Die Gerätekomponenten 6 sind in der Fig. 1 lediglich durch ein einzelnes Element dargestellt. Für jede der Gerätekomponenten 6 kann durch die Steuereinrichtung 5 eine jeweilige Bedienfunktion 8 bereitgestellt sein, durch die beispielsweise eine graphische Benutzerschnittstelle zum Bedienen der jeweiligen Gerätekomponente oder eine Steuerfunktion zum Auslösen einer Gerätefunktion der jeweiligen Gerätekomponente realisiert sein kann. Durch die Steuereinrichtung 5 können durch entsprechende Graphikdaten 9 auf der Anzeigefläche 4 der Anzeigeeinrichtung 3 die Bedienfunktionen 8 jeweils durch ein graphisches Objekt 10, beispielsweise ein Icon oder einen Schriftzug, oder einen Menüeintrag, repräsentiert sein.

Bei der Bedienvorrichtung 1 ist es ermöglicht, dass ein Benutzer nun gleichzeitig mehrere der graphischen Objekte 10 auswählt und hierdurch beispielsweise in einem Menü eine Auswahl der dem Benutzer auf der Anzeigefläche 4 anzubietenden Bedienfunktionen 8, das heißt eine Auswahl der nur noch anzuzeigenden graphischen Objekte 10, trifft. Es kann auch eine gleichzeitige Aktivierung mehrerer der Bedienfunktionen 8 durch eine entsprechende gleichzeitige Auswahl mehrerer der graphischen Objekte 10 realisiert sein. Zum Erkennen oder Erfassen der Benutzerauswahl kann die Bedienvorrichtung 1 eine Erfassungseinrichtung 11 aufweisen, die beispielsweise eine Kamera 12, insbesondere eine TOF-Kamera, und/oder eine näherungssensitive und/oder berührungssensitive Sensormatrix 13 umfassen kann. Die Sensormatrix 13 kann beispielsweise an der Anzeigefläche 4 bereitgestellt sein, das heißt die Anzeigeeinrichtung 3 ist in diesem Fall ein Touchscreen. Ein Erfassungsbereich 14 der Kamera 12 kann ebenfalls auf die Anzeigefläche 4 gerichtet sein.

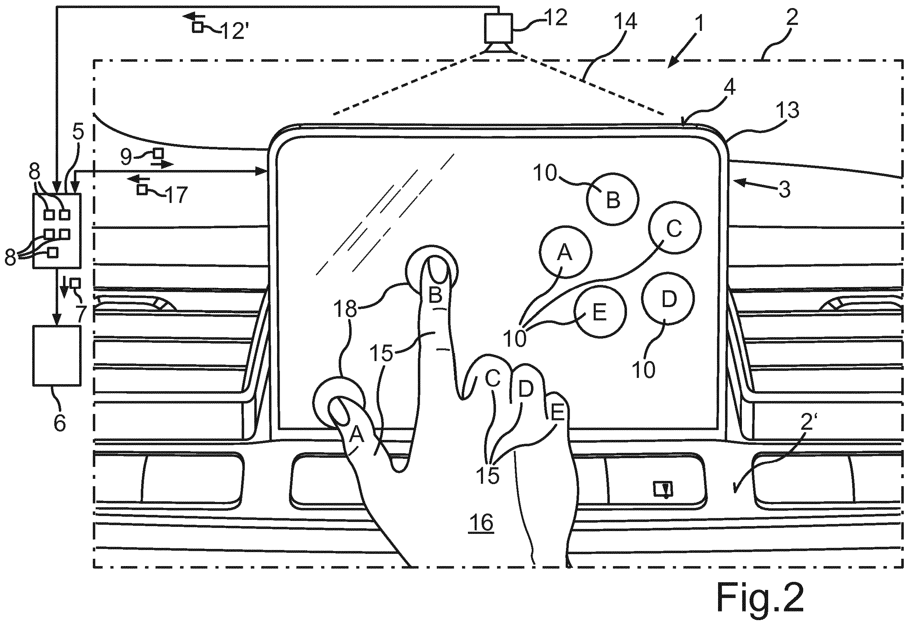

Fig. 2 veranschaulicht, wie nun durch die Steuereinrichtung 5 erkannt wird, dass der Benutzer mit Fingern 15 seiner Hand 16 die Anzeigefläche 4 berührt. Die Anzeigefläche 4 stellt in diesem Fall eine Berührfläche dar. Durch die Steuereinrichtung 5 sind den Bedienfunktionen 8 jeweils einer der Finger 15 der Hand 16 zugeordnet. Entsprechend ist auch jedem der graphischen Objekte 10 jeweils einer der Finger zugeordnet. Eine mögliche Zuordnung ist in Fig. 2 durch entsprechende Buchstaben A, B, C, D, E veranschaulicht.

Durch die Erkennungseinrichtung 11 kann erkannt werden, mit welchem der Finger 15 der Benutzer die Berührfläche in Form der Anzeigefläche 4 berührt. In dem gezeigten Beispiel sind es die Finger A, B, also beispielsweise der Daumen und der Zeigefinger.

Es können beispielsweise auf der Grundlage von 3D-Bilddaten 12' der Kamera 12 und/oder Berührdaten 17 der Sensormatrix 13 durch die Erfassungseinrichtung 11 entsprechende Fingerberührungen 18 erkannt und an die Steuereinrichtung 15 signalisiert. Es wird auch signalisiert, welche der Finger 15, also hier die Finger A, B, die Fingerberührungen 18 an der Berührfläche in Form der Anzeigefläche 4 durchführen.

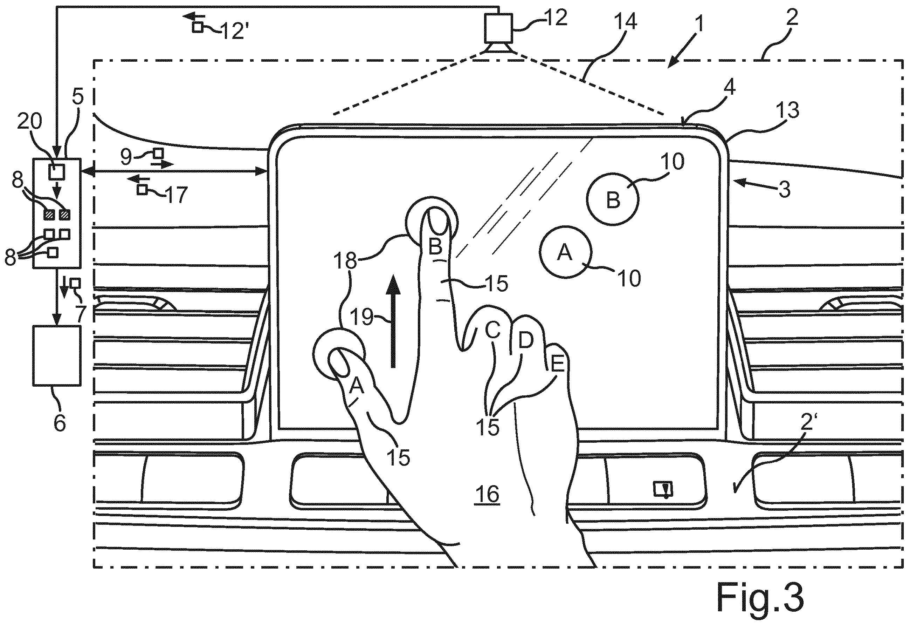

Fig. 3 veranschaulicht, wie der Benutzer durch eine Bestätigungsgeste 19 die Auswahl der durch die Fingerberührungen 18 ausgewählten Bedienfunktonen 8 bestätigt. Durch die Steuereinrichtung 5 werden durch Anpassen der entsprechenden Graphikdaten 9 die übrigen, nicht ausgewählten graphischen Objekte 10 auf der Anzeigefläche 4 gelöscht. Es kann nun vorgesehen sein, dass nur noch ein so angepasstes Bedienmenü dem Benutzer zukünftig auf der Anzeigefläche 4 angezeigt wird.

Die Bestätigungsgeste kann beispielsweise eine Bewegung der Hand zusammen mit den Fingern 15 entlang einer vorbestimmten Bewegungsrichtung, beispielsweise in Fig. 3 nach oben, sein. Mit dem Erkennen der Bestätigungsgeste 19 werden durch die Steuereinrichtung 5 Auswahldaten 20 erzeugt, welche beschreiben, welche der Bedienfunktionen 8 der Benutzer ausgewählt hat.

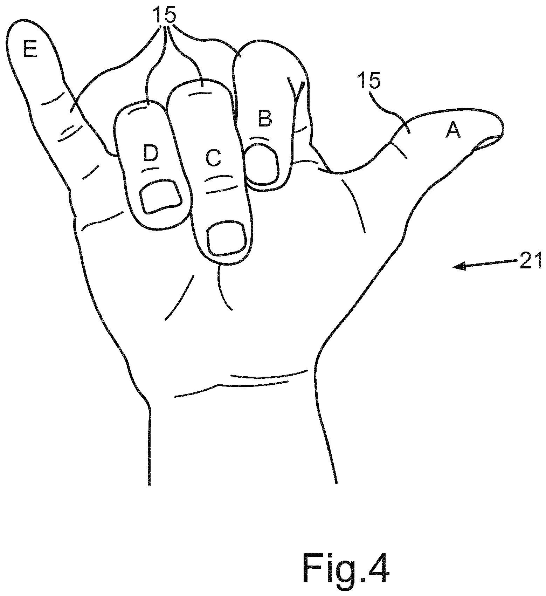

Fig. 4 veranschaulicht, mit welcher Fingerstellung 21 der Benutzer zwei andere Bedienfunktionen 8, nämlich diejenigen, welche den Fingern A, E zugeordnet sind, an der Bedienfläche auswählen könnte.

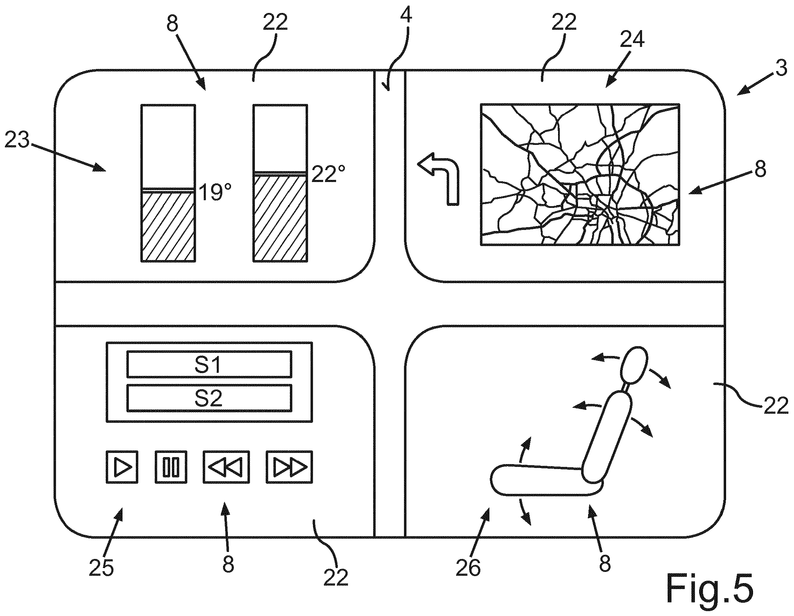

Fig. 5 veranschaulicht alternativ zum Konfigurieren eines Bedienmenüs, wie die ausgewählten Bedienfunktionen 8, wie sie durch die Auswahldaten 20 beschrieben sind, gleichzeitig aktiviert werden können und auf der Anzeigefläche 4 gemäß der Anzahl der ausgewählten Bedienfunktionen für jede Bedienfunktion eine Teilfläche oder ein Teilbereich 22 bereitgestellt wird, in welchem jede aktivierte Bedienfunktion 8 jeweils Funktionsdaten ausgibt, beispielsweise Zustandsdaten anzeigt oder Berührflächen oder Bedienflächen zum Empfangen von Benutzereingaben für die jeweilige Bedienfunktion 8 bereitstellt. Fig. 5 zeigt beispielhaft, wie vier Bedienfunktionen 8 durch die Anzeigeeinrichtung 3 angezeigt werden können. Beispielsweise können eine Klimatisierungseinstellung 23, eine Navigationsbedienung 24, eine Medienabspielbedienung 25 zum Abspielen beispielsweise von Musikdateien S1, S2, und eine Sitzeinstellfunktion 26 zum Einstellen einer Sitzstellung als jeweilige Bedienfunktion 8 gleichzeitig auf der Anzeigefläche 4 in einem jeweiligen Teilbereich 22 dargestellt sein.

Somit ermöglicht die Bedienvorrichtung 1 eine Mehrberührungs-Gestenbedienung oder Multi-Touch-Gestenbedienung zur Menü-Auswahl mehrerer Bedienfunktionen 8. Die Gestenbedienung an der berührungssensitiven Anzeigefläche 4 eines Touchscreens 3 oder auch an einer virtuellen Berührebene oder einer Berührebene eines Touchpads dient zur Erfassung einer Wunschanordnung der Menüstruktur oder zum gleichzeitigen Aktivieren mehrerer Bedienfunktionen.

Im Falle der Menüanordnung kann, wie in Fig. 1 dargestellt, zunächst eine Standardausrichtung der einzelnen Menüpunkte in Form eines jeweiligen graphischen Objekts 10, beispielsweise für Radio, Navigation, angezeigt werden. Fig. 2 veranschaulicht, wie die Auswahl mittels Erfassung von Fingerberührungen 18 oder Finger-Taps erfolgt, wobei die Anzahl und die Fingerposition ermittelt werden. Fig. 3 zeigt, wie durch das Schieben nach oben oder eine alternative Bewegungsrichtung alle Menüpunkte in Form der graphischen Objekte 10 außer den ausgewählten ausgeblendet werden.

Die beschriebenen Gesten können an dem Touchscreen durch die Sensormatrix 13 oder frei in der Luft durch berührungsloses Erfassen mittels einer TOF-Kamera erkannt werden. Entsprechende Programmmodule sind mit geringem Aufwand an die jeweilige Ausgestaltung der Bedienvorrichtung 1 anpassbar.

Insgesamt zeigt das Beispiel, wie durch die Erfindung eine Multi-Touch-Gestenbedienung zur Menü-Selektierung bereitgestellt werden kann.

## Patentansprüche

1. Verfahren zum Erfassen einer Benutzerauswahl einer oder einiger oder aller Bedienfunktionen (8) aus einer vorbestimmten Menge mehrerer Bedienfunktionen (8) einer Bedienvorrichtung (1), wobei in der Bedienvorrichtung (1)
- durch eine Steuereinrichtung (5) jeder der Bedienfunktionen (8) der Menge jeweils ein Finger (15) einer Hand (16) eines Benutzers zugeordnet wird,
- durch eine Erfassungseinrichtung (11) an einer vorbestimmten Berührfläche (4) der Bedienvorrichtung (1) eine Fingerberührung (18) zumindest eines der Finger (15) der Hand (16) erfasst wird und ermittelt wird, welcher der Finger (15) der Hand (16) die Berührfläche (4) berührt,
- durch die Steuereinrichtung (5) als die Benutzerauswahl insgesamt jede der Bedienfunktionen (8), deren zugeordneter Finger (15) die Berührfläche (4) berührt, festgelegt wird und die Benutzerauswahl durch Auswahldaten (20), welche jede ausgewählte Bedienfunktion (8) identifizieren, an einen nachfolgenden Prozessschritt der Bedienvorrichtung (1) signalisiert wird; und
- wobei die Bedienfunktionen (8) der Menge jeweils durch ein eigenes graphisches Objekt (10) auf einer Anzeigefläche (4) repräsentiert werden und in dem Prozessschritt das jeweilige graphische Objekt (10) jeder aus der Benutzerauswahl ausgeschlossenen Bedienfunktion (8) der Menge von der Anzeigefläche (4) gelöscht wird, und wobei die graphischen Objekte (10) in einem anderen räumlichen Bereich angezeigt werden als die jeweilige Fingerberührung (18) des zumindest einen Fingers (15) erfasst wird, **dadurch gekennzeichnet, dass**
- in dem Prozessschritt jede ausgewählte Bedienfunktion (8) aktiviert wird und die Anzeigefläche (6) derart eingeteilt betrieben wird, dass gleichzeitig jeder aktivierten Bedienfunktion (8) ein jeweiliger eigener Teilbereich (22) der Anzeigefläche (4) zum Ausgeben von jeweiligen Funktionsdaten bereitsteht.

2. Verfahren nach Anspruch 1, wobei die Benutzerauswahl erst festgelegt wird, falls durch die Erfassungseinrichtung (11) eine Bestätigungsgeste (19) der Hand (16) detektiert wird.

3. Verfahren nach Anspruch 2, wobei als die Bestätigungsgeste (19) eine Gesamtbewegung der Hand (16) mitsamt den die Berührfläche (4) berührenden Fingern (15) in eine vorbestimmte Richtung entlang der Berührfläche (4) detektiert wird.

4. Verfahren nach einem der vorhergehenden Ansprüche, wobei die Fingerberührung (18) des zumindest einen Fingers (15) an der Berührfläche (4) durch eine Sensormatrix (13) mit näherungssensitiven und/oder berührungssensitiven Sensoren und/oder mittels einer Kamera (12) detektiert wird.

5. Verfahren nach einem der vorhergehenden Ansprüche, wobei zum Identifizieren des zumindest einen die Berührfläche (4) berührenden Fingers (15)
- eine Anordnung von Berührstellen der berührenden Finger (15) an der Berührfläche (4) zugrunde gelegt wird und/oder
- die Finger (15) der Hand (16) mittels einer Time-of-Flight-Kamera (12) erfasst und in 3D-Bilddaten (12') der Time-of-Flight-Kamera (12) jeder Finger (15) der Hand (16) erkannt und ein jeweiliger Abstand jedes Fingers (15) zur Berührfläche (4) ermittelt wird.

6. Bedienvorrichtung (1) zum Erfassen einer Benutzerauswahl einer oder einiger oder aller Bedienfunktionen (8) aus einer vorbestimmten Menge mehrerer Bedienfunktionen (8) der Bedienvorrichtung (1), aufweisend:
- eine Erfassungseinrichtung (11) zum Erfassen einer Fingerberührung (18) zumindest eines Fingers (15) einer Hand (16) eines Benutzers an einer vorbestimmten Berührfläche (4) der Bedienvorrichtung (1) und zum Ermitteln, welcher der Finger (15) der Hand (16) die Berührfläche (4) berührt, und
- eine Steuereinrichtung (5), die dazu eingerichtet ist, jeder der Bedienfunktionen (8) der Menge jeweils einen der Finger (15) der Hand (16) zuzuordnen und als die Benutzerauswahl insgesamt jede der Bedienfunktionen (8), deren zugeordneter Finger (15) die Berührfläche (4) berührt, festzulegen und die Benutzerauswahl durch Auswahldaten (20), welche jede ausgewählte Bedienfunktion (8) identifizieren, an einen nachfolgenden Prozessschritt der Bedienvorrichtung (1) zu signalisieren, und
- wobei die Bedienvorrichtung (1) dazu eingerichtet ist,die Bedienfunktionen (8) der Menge jeweils durch ein eigenes graphisches Objekt (10) auf einer Anzeigefläche (4) zu repräsentieren und in dem Prozessschritt das jeweilige graphische Objekt (10) jeder aus der Benutzerauswahl ausgeschlossenen Bedienfunktion (8) der Menge von der Anzeigefläche (4) zu löschen, und die graphischen Objekte (10) in einem anderen räumlichen Bereich anzuzeigen als die jeweilige Fingerberührung (18) des zumindest einen Fingers (15) erfasst wird,
**dadurch gekennzeichnet, dass**
- die Bedienvorrichtung (1) dazu eingerichtet ist, dabei in dem Prozessschritt jede ausgewählte Bedienfunktion (8) zu aktivieren und die Anzeigefläche (6) derart eingeteilt zu betreiben, dass gleichzeitig jeder aktivierten Bedienfunktion (8) ein jeweiliger eigener Teilbereich (22) der Anzeigefläche (4) zum Ausgeben von jeweiligen Funktionsdaten bereitsteht.

7. Kraftfahrzeug (2), **gekennzeichnet durch** eine Bedienvorrichtung (1) nach Anspruch 6.

## Claims

1. Method for detecting a user selection of one or some or all operating functions (8) from a predetermined set of a plurality of operating functions (8) of an operating device (1), wherein in the operating device (1)
- a finger (15) of a hand (16) of a user is associated with each of the operating functions (8) of the set by a control device (5),
- a finger contact (18) of at least one of the fingers (15) of the hand (16) is detected by a detection device (11) at a predetermined contact surface (4) of the operating device (1), and it is determined which of the fingers (15) of the hand (16) is in contact with the contact surface (4),
- each of the operating functions (8), the associated finger (15) of which contacts the contact surface (4), is determined by the control means (5) as the user selection as a whole, and the user selection is signalled to a subsequent process step of the operating device (1) by selection data (20) that identifies each selected operating function (8); and
- wherein the operating functions (8) of the set are each represented by a distinct graphic object (10) on a display surface (4), and in the process step the respective graphic object (10) of each operating function (8) of the set, which is excluded from the user selection, is deleted from the display surface (4), and wherein the graphic objects (10) are displayed in a spatial area that is different from the one in which the respective finger contact (18) of the at least one finger (15) is detected, **characterized in that**
- in the process step, each selected operating function (8) is activated and the display surface (6) is operated divided in such a way that at the same time each activated operating function (8) has its own respective subarea (22) of the display surface (4) available for outputting respective function data.

2. Method according to claim 1, wherein the user selection is determined only if a confirmation gesture (19) of the hand (16) is detected by the detection device (11).

3. Method according to claim 2, wherein a total movement of the hand (16) together with the fingers (15) contacting the contact surface (4) in a predetermined direction along the contact surface (4) is detected as the confirmation gesture (19).

4. Method according to any one of the preceding claims, wherein the finger contact (18) of the at least one finger (15) on the contact surface (4) is detected by a sensor matrix (13) with proximity-sensitive and/or contact-sensitive sensors and/or by means of a camera (12).

5. Method according to any one of the preceding claims, wherein for identifying the at least one finger (15) contacting the contact surface (4)
- an arrangement of contact points of the contacting fingers (15) on the contact surface (4) is taken as a basis, and/or
- the fingers (15) of the hand (16) are detected by means of a time-of-flight camera (12), and in 3D image data (12') of the time-of-flight camera (12) each finger (15) of the hand (16) is recognised and a respective distance of each finger (15) to the contact surface (4) is determined.

6. Operating device (1) for detecting a user selection of one or some or all operating functions (8) from a predetermined set of a plurality of operating functions (8) of the operating device (1), comprising:
- a detection device (11) for detecting a finger contact (18) of at least one finger (15) of a hand (16) of a user on a predetermined contact surface (4) of the operating device (1) and for determining which of the fingers (15) of the hand (16) contacts the contact surface (4), and
- a control device (5) designed to associate one of the fingers (15) of the hand (16) with each of the operating functions (8) of the set, respectively, and to determine as the user selection as a whole each of the operating functions (8), the associated finger (15) of which contacts the contact surface (4), and to signal the user selection to a subsequent process step of the operating device (1) by selection data (20) that identifies each selected operating function (8), and
- wherein the operating device (1) is designed to represent the operating functions (8) of the set each by a distinct graphic object (10) on a display surface (4) and, in the process step, to delete the respective graphic object (10) of each operating function (8) of the set excluded from the user selection from the display surface (4) and to display the graphic objects (10) in a spatial area that is different from the one in which the respective finger contact (18) of the at least one finger (15) is detected,
**characterized in that**
- the operating device (1) is designed to activate each selected operating function (8) in the process step and to operate the display surface (6) divided in such a way that at the same time each activated operating function (8) has its own respective subarea (22) of the display surface (4) available for outputting respective function data.

7. Motor vehicle (2), **characterized by** an operating device (1) according to claim 6.

## Revendications

1. Procédé pour détecter une sélection d'utilisateur d'une ou de plusieurs ou de la totalité des fonctionnalités (8) à partir d'un ensemble prédéterminé d'une pluralité de fonctionnalités (8) d'un dispositif d'actionnement (1), dans lequel, dans le dispositif d'actionnement (1)
- un doigt (15) d'une main (16) d'un utilisateur est associé à chacune des fonctionnalités (8) de l'ensemble par un appareil de commande (5),
- un contact de doigt (18) d'au moins un des doigts (15) de la main (16) est détecté par un appareil de détection (11) sur une surface de contact prédéterminée (4) du dispositif d'actionnement (1) et celui des doigts (15) de la main (16) qui vient en contact avec la surface de contact (4) est établi,
- chacune des fonctionnalités (8) dont le doigt associé (15) vient en contact avec la surface de contact (4) est définie comme la sélection d'utilisateur par le dispositif de commande (5), et la sélection d'utilisateur est signalée à une étape de processus ultérieure du dispositif d'actionnement (1) par des données de sélection (20) qui identifient chaque fonctionnalité sélectionnée (8) ; et
- dans lequel les fonctionnalités (8) de l'ensemble sont représentées chacune par leur propre objet graphique (10) sur une surface d'affichage (4) et, dans l'étape de processus, l'objet graphique respectif (10) de chaque fonctionnalité (8) de l'ensemble exclue de la sélection d'utilisateur est supprimée de la surface de contact (4), et dans lequel les objets graphiques (10) sont affichés dans une zone spatiale différente de celle dans laquelle le contact de doigt respectif (18) du au moins un doigt (15) est détecté, **caractérisé en ce que**
- dans l'étape de processus, chaque fonctionnalité sélectionnée (8) est activée et la surface d'affichage (6) est actionnée de manière divisée de telle sorte que, en même temps, chaque fonctionnalité activée (8) est dotée de sa propre zone partielle respective (22) de la surface d'affichage (4) pour la sortie de données de fonction respectives.

2. Procédé selon la revendication 1, dans lequel la sélection d'utilisateur n'est déterminée que si un geste de confirmation (19) de la main (16) est détecté par l'appareil de détection (11).

3. Procédé selon la revendication 2, dans lequel un mouvement total de la main (16) avec les doigts (15) en contact avec la surface de contact (4) dans une direction prédéterminée le long de la surface de contact (4) est détecté en tant que geste de confirmation (19).

4. Procédé selon l'une quelconque des revendications précédentes, dans lequel le contact de doigt (18) du au moins un doigt (15) sur la surface de contact (4) est détecté par une matrice de capteurs (13) avec des capteurs sensibles à la proximité et/ou sensibles au contact et/ou au moyen d'une caméra (12).

5. Procédé selon l'une quelconque des revendications précédentes, dans lequel, pour identifier le au moins un doigt (15) en contact avec la surface de contact (4)
- un agencement de points de contact des doigts (15) en contact sur la surface de contact (4) est utilisé comme base, et/ou
- les doigts (15) de la main (16) sont détectés au moyen d'une caméra à temps de vol (12) et chaque doigt (15) de la main (16) est détecté dans des données d'image 3D (12') de la caméra à temps de vol (12) et une distance respective de chaque doigt (15) par rapport à la surface de contact (4) est déterminée.

6. Dispositif d'actionnement (1) pour détecter une sélection d'utilisateur d'une ou de plusieurs ou de la totalité des fonctionnalités (8) à partir d'un ensemble prédéterminé d'une pluralité de fonctionnalités (8) du dispositif d'actionnement (1), présentant :
- un appareil de détection (11) pour détecter un contact de doigt (18) d'au moins un doigt (15) d'une main (16) d'un utilisateur sur une surface de contact prédéterminée (4) du dispositif d'actionnement (1) et pour déterminer celui des doigts (15) de la main (16) qui vient en contact avec la surface de contact (4), et
- un appareil de commande (5) qui est configuré pour associer l'un des doigts (15) de la main (16) à chacune des fonctionnalités (8) de l'ensemble et pour définir en tant que sélection d'utilisateur au total chacune des fonctionnalités (8) dont le doigt associé (15) vient en contact avec la surface de contact (4), et pour signaler la sélection d'utilisateur à une étape de processus suivante du dispositif d'actionnement (1) au moyen de données de sélection (20) qui identifient chaque fonctionnalité sélectionnée (8), et
- dans lequel le dispositif d'actionnement (1) est configuré pour représenter les fonctionnalités (8) de l'ensemble respectivement par leur propre objet graphique (10) sur une surface d'affichage (4) et, dans l'étape de processus, pour supprimer l'objet graphique respectif (10) de chaque fonctionnalité (8) de l'ensemble exclue de la sélection d'utilisateur à partir de la surface d'affichage (4), et pour afficher les objets graphiques (10) dans une zone spatiale différente de celle dans laquelle le contact de doigt respectif (18) du au moins un doigt (15),
**caractérisé en ce que**,
- le dispositif d'actionnement (1) est configuré pour activer chaque fonctionnalité sélectionnée (8) dans l'étape de processus et pour actionner la surface d'affichage (6) d'une manière divisée de telle sorte que simultanément, chaque fonctionnalité activée (8) est pourvue de sa propre zone partielle respective (22) de la surface d'affichage (4) pour émettre des données de fonction respectives.

7. Véhicule automobile (2) **caractérisé par** un dispositif d'actionnement (1) selon la revendication 6.
